# EUROPEAN PATENT APPLICATION

(11) **EP 0 933 305 A2**
(43) Date of publication of application: **04.08.1999**
(21) Application number: 99300567.7
(22) Date of filing: 26.01.1999
(51) Int. Cl.: B65D 65/38, B65D 81/26

(54) **Film wrap for perishable products**

(30) Priority: 27.01.1998 US 14257
(71) Applicant: Kim, Hee Jung, Seoul 138-220 (KR); Shin, Myoung Soo, Seoul 136-020 (KR)
(72) Inventor: Kim, Hee Jung, 86 Chamsil-dong, Songpa-ku, Seoul 138-22 (KR); Shin, Myoung Soo, Seoul 136-020 (KR); Park, Sang Chul, Seocho-ku, Seoul 137-044 (KR)
(74) Representative: Evens, Paul Jonathan

(57) **Abstract**

A film wrap used to preserve perishable products such as food. The film wrap is irradiated by far infrared light in order to produce a film wrap with an electron deficiency. This electron deficiency drives a surface reaction which depletes the oxygen from one side of the film wrap. Thus, when the film wrap is used to wrap a container, the side of the film wrap that has been exposed to far infrared light reacts with the oxygen to lessen the amount of oxygen in the container, thereby further preserving the food.

## Description

### BACKGROUND OF THE INVENTION

### 1. Field of the Invention

The present invention pertains generally to the field of preserving perishable products, and specifically to film wraps used to isolate the perishable products from oxygen.

### 2. Description of the Prior Art

Film Wraps are often used in order to isolate perishable products from oxygen. It is commonly known that exposure to oxygen is the primary contributor to the rotting of perishable products such as food.

Although the prior art teach inventions pertaining to film wraps, they do not teach a film wrap with similar functions taught by the present invention. Moreover, the manner in which the present invention accomplishes the aforementioned functions is novel and unanticipated.

Consequently, the primary object of the present invention is to provide a film wrap for perishable products.

A further object of the present invention is to provide a film wrap that helps in isolating perishable products from oxygen in the atmosphere.

### SUMMARY OF THE INVENTION

The present invention comprises a multi-step process that yields a film wrap whereupon a surface reaction occurs that depletes the oxygen supply from one side of the film. The film wrap is irradiated by far infrared light thereby creating an electron deficiency which serves as the driving force for a surface reaction where water and oxygen are converted to hydroxide groups and oxygen.

These together with other objects of the invention are explained clearly in the claims annexed to and forming a part of this disclosure. For a better understanding of the invention, its operating advantages and the specific objects attained by its use, reference should be made to the accompanying drawings and descriptive matter in which there are illustrated preferred embodiments of the invention.

### DETAILED DESCRIPTION OF THE PREFERRED EMBODIMENT

The present invention is the irradiation of plastic film wrap by far infrared light. The irradiation creates an electron deficiency, wherein the amount of deficiency is proportional to the duration of irradiation. The following surface reaction takes place upon the film wrap: 2e⁻ + H₂O + O₂ → 2OH⁻ + ½O₂ Depending upon which side of the film wrap is used to cover a container with perishable products, the irradiated film wrap functions as a surface catalyst for the above reaction. The irradiated side should be on the inner side (the side with the perishable products) in order to reduce the amount of oxygen in the container. The film wrap may be irradiated by far infrared light of varying wavelengths according to the materials used to make the film wrap.

## Claims

1. A process for producing a oxygen depleting film wrap comprising the irradiation of said film wrap by far infrared light.

2. A process for producing a oxygen depleting film wrap according to claim 1, wherein said film wrap is exposed to infrared light of varying wavelengths.

3. A plastic film wrap having an electron deficiency on at least one surface.
